# EUROPÄISCHE PATENTSCHRIFT

(11) **EP 0 839 676 B1**
(45) Veröffentlichungstag und Bekanntmachung des Hinweises auf die Patenterteilung: **05.01.2000**
(21) Anmeldenummer: 97118887.5
(22) Anmeldetag: 30.10.1997
(51) Int. Cl.: B60G 11/27, F16F 9/04

(54) **Rollbalg-Luftfeder**
Rolling bellows air spring
Ressort pneumatique à soufflet roulant

(30) Priorität: 04.11.1996 DE 29619081 U
(43) Veröffentlichungstag der Anmeldung: 06.05.1998
(73) Patentinhaber: ContiTech Luftfedersysteme GmbH, 30165 Hannover (DE)
(72) Erfinder: Voss, Hartwig, 30457 Hannover (DE)
(74) Vertreter: Schneider, Egon

(56) Entgegenhaltungen:
- EP-A- 0 501 043
- WO-A-79/00411
- DE-B- 1 048 165
- DE-C- 3 147 231
- GB-A- 964 138

## Beschreibung

Die Erfindung betrifft eine Rollbalg-Luftfeder gemäß dem Oberbegriff des Patentanspruchs 1.

Luftfedern werden entsprechend den jeweils erforderlichen Eigenschaften wie Tragkraft, Federcharakteristik und Federweg entwickelt. Grundsätzlich unterscheidet man zwischen Rollbalg- und Faltenbalg-Luftfedern.

Die im folgenden zu beschreibenden Rollbalg-Luftfedern bestehen im wesentlichen aus dem Luftfederbalg zur Aufnahme der Federbewegung und einem Abrollkolben.
Die Rollfederbälge werden aus elastischem Material hergestellt. Die (offenen) Enden sind mittels Befestigungsteilen abgedichtet. Beim Federn rollt der Rollbalg auf dem Abrollkolben ab.

Luftfedern mit einem Rollbalg, der - entsprechend der Erfindung - einen verspannbaren Dichtwulst aufweist, unterscheiden sich von Luftfedern mit einem Rollbalg, der eine konische Dichtfläche aufweist, durch die Art der Einspannung.
Die Federcharakteristik hängt im wesentlichen davon ab, ob das jeweilige Volumen des Abrollkolbens dem jeweiligen Volumen des Rollbalgs als Federgröße hinzuzurechnen ist oder nicht.

Insbesondere dann, wenn die Luftfederung durch einen Hebelarm eine Übersetzung des Federwegs erfährt, sollte das Federelement besonders weich ausgebildet sein. Dies ist aber bei üblichen Luftfedern (z. B. gemäß US 4.506.910) nicht der Fall. Die Federung ist hart, denn die Nachgiebigkeit der Feder ist ausschließlich durch das Volumen des Federbalgs und nicht auch zusätzlich durch das Volumen des Kolbens gegeben, wie es z. B. entsprechend der in der DE-C-31 47 231 dargestellten Luftfeder der Fall ist.

Die Luftfeder gemäß der Patentschrift DE-C-31 47 231, die als nächstliegender Stand der Technik angesehen wird, offenbart eine Rollbalg-Luftfeder mit einem Rollbalg, mit einer Abdeckplatte und mit einem Abrollkolben, wobei der Rollbalg einen mittels eines Spanntellers am Abrollkolben verspannbaren Dichtwulst aufweist und das Kolben-Volumen und das Rollbalg-Volumen zum Zwecke eines Druckausgleichs miteinander verbunden sind; wobei auf dem oberen, über dem Spannteller hinausragenden Ende der Gewindespindel ein Gummipuffer angeordnet ist; und wobei der Spannteller ein tiefgezogener/-geformter, mit mehreren Bohrungen versehener Topf ist. Die Bohrungen stellen öffnungen dar, die sich in einem Formblech befinden, das den Tauchkolben gegen den Federbalg begrenzt. Durch diese öffnungen ist das Volumen des Federbalgs und das Volumen des Tauchkolbens miteinander verbunden. Hierdurch ergibt sich ein größeres (Gesamt-)Volumen, was eine weichere Federwirkung zur Folge hat.
Der in der DE-C-31 47 231 beschriebene Federbalg weist an seinem oberen und unteren Ende Dichtwülste auf, die lediglich mittels eines Sprengrings bzw. mittels eines Formblechs mit den starren Teilen der Luftfeder verbunden sind.

Die mit den Merkmalen des Anspruchs 1 gelöste Aufgabe der Erfindung besteht darin, eine Luftfederkonstruktion zu beschreiben, bei der ein zuverlässig dichter Anschluß des Kolben-Volumens an das Rollbalg-Volumen gewährleistet ist. Vorteilhafte Weiterbildungen werden in den Unteransprüchen genannt.

Bei der erfindungsgemäßen Konstruktion ist das Kolbenvolumen an das Balgvolumen angekoppelt. Durch Hinzufügen des Kolbenvolumens zum Luftfederbalgvolumen ergibt sich eine flach ausgebildete Federcharacteristik, d. h. die Luftfeder ist weich und die Eigenfequenz des Feder-Masse-Systems ist klein.

Zu diesem Zweck ist der Balgwulst an dem Kolben fest verspannt; der Kolben ist aber auch - z. B. für Ersatzbedarf - demontierbar.
Mit Hilfe einer Gewindespindel kann das Verspannen des Balgs mit dem Kolben gewissermaßen "von außen" erfolgen, wodurch sich die Montage bzw. Demontage in beträchtlichem Maße vereinfacht.

Wenn man den unteren Wulst des Rollbalgs an den Spannteller anvulkanisiert, ergibt sich eine besonders zuverlässige Dichtheit zwischen Balg und Kolben. Diese wird jedoch bei Anbindung des Kolbenvolumens an das Balgvolumen überflüssig. Der Dichtbereich verlagert sich an den Außenrand des Wulstes.

Durch eine oder mehrere umlaufende Dichtlippen an dieser Stelle des Balgwulstes wird eine Abdichtung zwischen der Dichtfläche des Kolbens und dem mit dem Spannteller eingespannten Rollbalg zuverlässig erreicht.

Im folgenden wird die Erfindung anhand der beigefügten Zeichnungen näher erläutert.

Es zeigt:
Fig. 1 eine erfindungsgemäße Luftfeder;
Fig. 2 eine herkömmliche Luftfeder mit Konusabdichtung;
Fig. 3 eine herkömmliche Luftfeder ohne Anbindung des Kolbenvolumens;
Fig. 4 eine bevorzugte Anordnung von Luftfedern in Anhängern, Aufliegern oder auch LKW-Hinterachsen;
Fig. 5 eine Weiterbildung der erfindungsgemäßen Luftfeder;

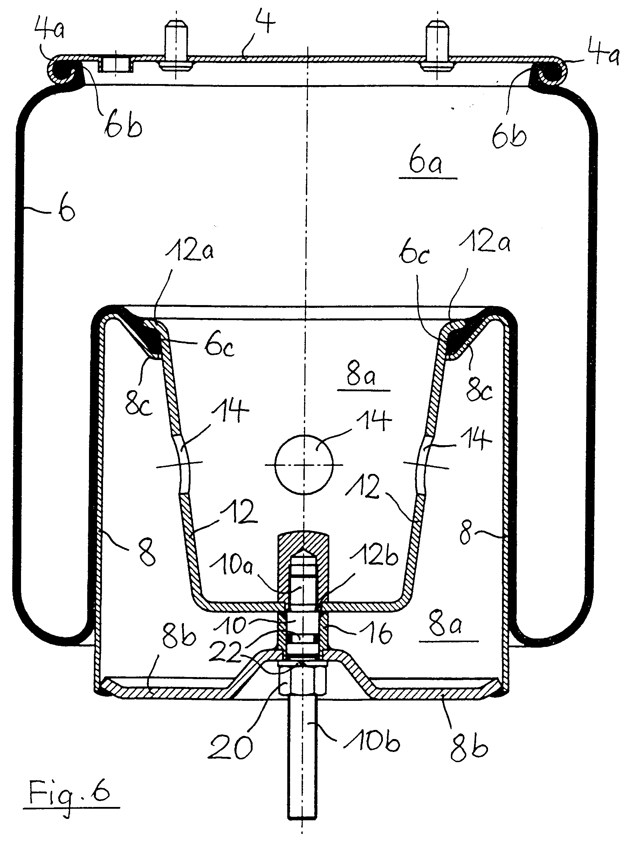

Fig. 6 eine alternative Ausführungsform, bei dem der Spannteller als tiefgezogener Topf ausgebildet ist;
Fig. 7a/7b eine herkömmliche, bzw. eine erfindungsgemäße Abdichtzone zwischen Balg und Kolben.

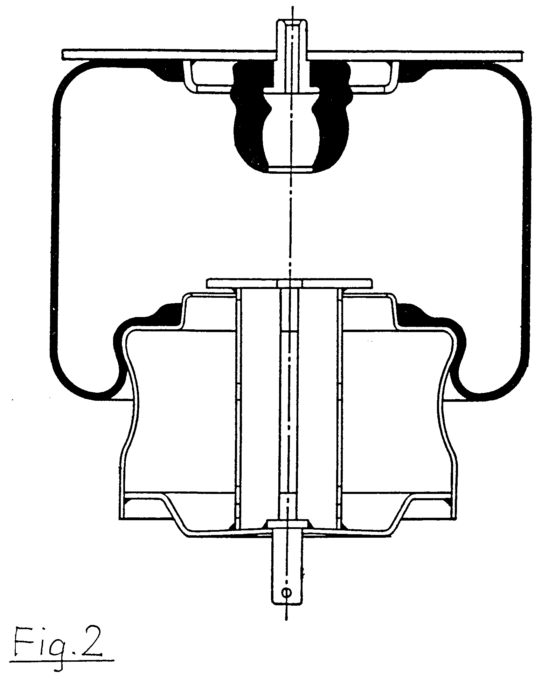

Bei Luftfedern mit Konusabdichtungen am Kolben ist es auf einfache Weise möglich, das Kolbenvolumen mit dem Balgvolumen zu verbinden (Fig. 2).

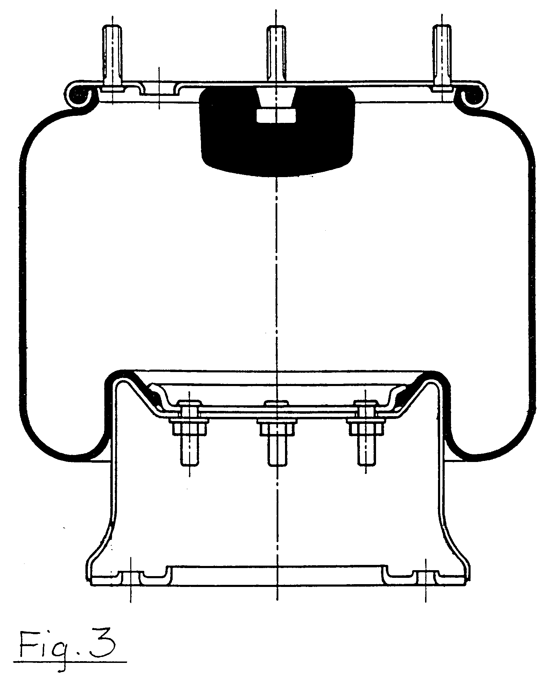

Bei Luftfedern, die am Abrollkolben mit einem Spannteller fest verschraubt werden, ist das Kolbenvolumen bisher nicht oder nur teilweise genutzt worden, (Fig. 3). Die Verschraubung ließ keine volle Nutzung des Kolbenvolumens als Teil des Federvolumens zu. Diese feste Verschraubung des Wulstes am Kolben wird aber bei bestimmten Achskonstruktionen (z. B. Längsschwinge, Parabellenker) im LKW- und Anhängerbereich bei großen Ausfederbewegungen benötigt, um das Herunterziehen des Wulstes vom Kolben zu vermeiden.

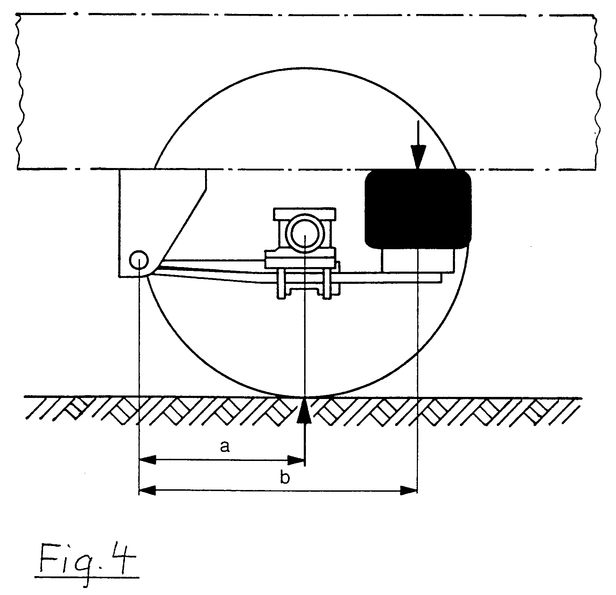

In vielen Fällen sitzt hier die Luftfeder hinter der Achse auf einem großeren vom Drehpunkt entfernten Hebelarm (Fig. 4).
Um guten Federkomfort bei derartigen Achsen zu erhalten, ist also eine weiche Luftfeder erforderlich.

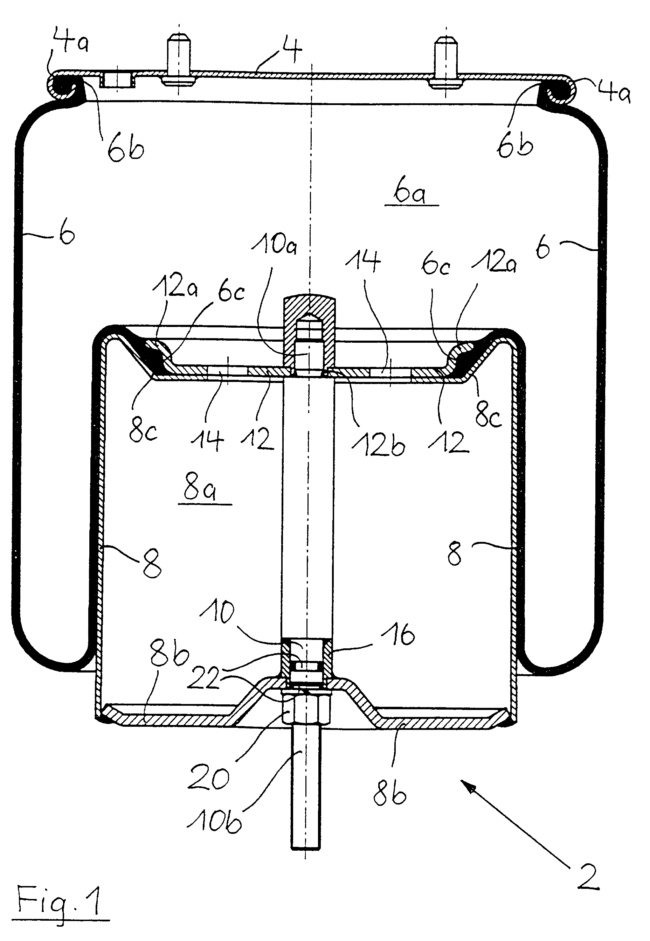

Eine erfindungsgemäße Luftfeder 2 ist in Fig. 1 dargestellt. Dieser Konstruktion liegt die Forderung zugrunde, eine gattungsgemäße Luftfeder so weiterzubilden, daß das Kolbenvolumen 8a, und das Balgvolumen 6a miteinander verbunden sind.

Die in Fig. 1 dargestellte erfindungsgemäße Luftfeder 2 besteht im wesentlichen aus einer am Fahrzeugrahmen bzw. Chassis zu befestigenden Abdeckplatte 4, einem Rollbalg 6 und einem achs- bzw. radseitig befestigten (Abroll-)Kolben 8.

Der obere Rand 6b des Rollbalgs 6 ist luftdicht in an sich bekannter Weise mit dem äußeren Rand 4a der Abdeckplatte 4 verbunden.

Der Boden 8b des topfförmig ausgebildeten (Abroll-)Kolbens 8 ist geschlossen. Das obere Ende 8c des Kolbens 8 stellt eine (konzentrisch) plane oder konische Dichtfläche dar, auf der das untere, mit einem Dichtwulst 6c versehene Ende des Rollbalgs 6 dicht anliegt.

Mit Hilfe einer hinreichend langen Gewindestange 10 wird der ain unteren Rand 6c des Rollbalgs 6 ausgebildete Wulst fest zwischen einem gelochten Spannteller 12 und der Dichtfläche 8c des Kolbens 8 eingespannt. Die Gewindestange 10 ist durch eine am Boden 8b des Kolbens 8 luftdicht angebrachte Hülse 16 geführt. An seinem oberen Ende 10a ist die Gewindestange 10 in ein im Zentrum des Spanntellers 12 befindliches Gewinde 12b geschraubt, während sie 10 an ihrem unteren Ende 10b mit einer Mutter 20 versehen ist.

Das Festziehen des Spanntellers 12 und damit Verpressen der Dichtlippen des Wulstes 6c erfolgt durch Anziehen der Mutter 20.

Der Rand 12a des Spanntellers 12 kann lose oder durch Vulkanisation mit dem unteren Rand 6c des Rollbalgs 6 verbunden sein.

Der Spannteller 12 ist nicht in herkömmlicher Weise geschlossen ausgebildet sondern weist ein, zwei oder mehrere Löcher 14 auf, wodurch das Kolbenvolumen 8a und das Balgvolumen 6a miteinander verbunden sind.

Die Befestigung des erfindungsgemaßen Spanntellers 12 besteht im Unterschied zur Befestigung herkömmlicher Spannteller insbesondere darin, daß der Spannteller 12 nicht - wie üblich - an der oberen Stirnfläche des Kolbens befestigt wird sondern am Kolbenboden 8b. Hier im Kolbenboden 8b wird die Gewindestange 10 mittels O-Ringen 22 zum Kolbenvolumen 8a hin abgedichtet.

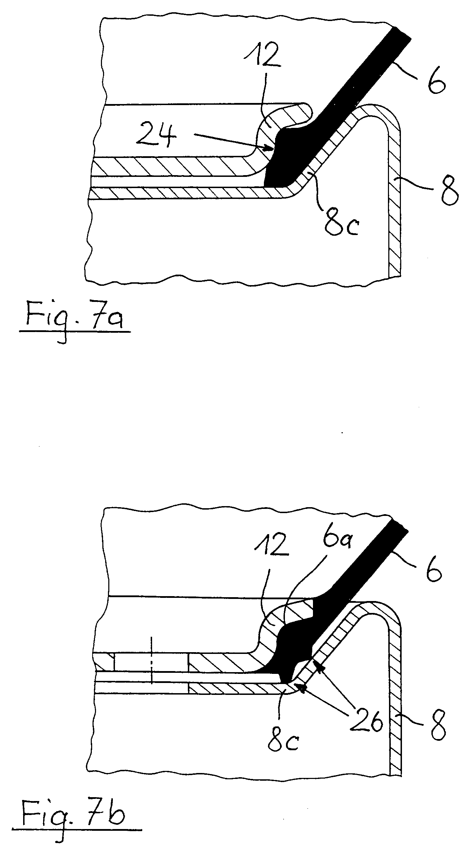

Die Abdichtung des Luftfederbalg-Wulstes 6c an der am oberen Rand des Kolbens 8 befindlichen Dichtfläche 8c unterscheidet sich ebenfalls von der herkömmlichen Abdichtung: An die Stelle eines herkömmlichen, geschlossenen Spanntellers mit einer zwischen Wulstunterseite und äußerem Rand des Spanntellers befindlichen Dichtzone 24 (Fig. 7a) tritt erfindungsgemäß nun eine Abdichtzone 26 zwischen Wulstaußenseite und Kolbenmantel (Fig. 7b). Der erfindungsgemäße Spannteller 12 weist Bohrungen (Löcher 14) auf. Damit ist eine konstruktive Anbindung des Balgvolumens 6a an das Kolbenvolumen 8a gegeben.

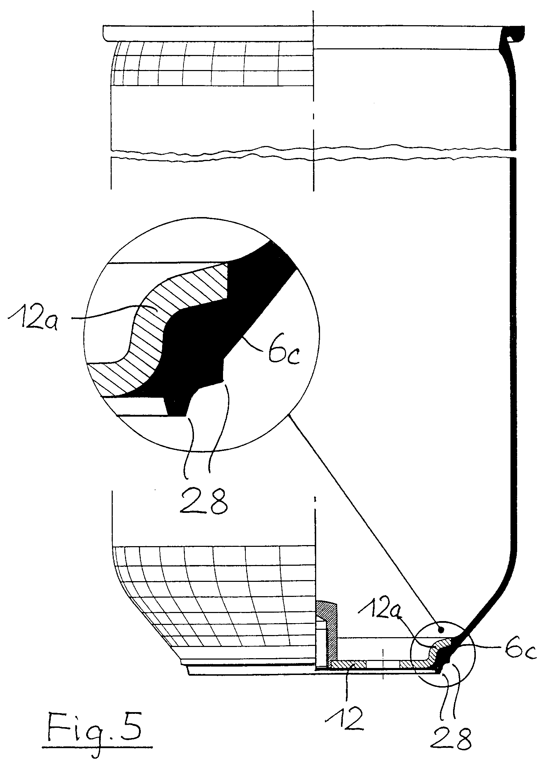

In bevorzugter Ausgestaltung der Erfindung, wobei der Rand 12a des Spanntellers 12 einvulkanisiert ist, ist der kolbenseitige Balgwulst 6c zur besseren Abdichtung an der Außenkontur mit ein, zwei oder mehreren umlaufenden Dichtrippen 28 versehen (Fig. 5).

Auf dem oberen, über den Spannteller 12 hinausragenden Ende 10a der Gewindespindel 10 ist vorzugsweise ein Gummipuffer (nicht gezeigt) angeordnet. In dem in Fig. 1 dargestellten Ausführungsbeispiel dient das obere Ende 10a der Spindel 10 als metallischer Anschlag.

Ist der Spannteller 12 als tiefgezogener /-geformter Topf mit einer oder mehreren Bohrungen 14 zur Nutzung des Kolbenvolumens 8a ausgebildet, so kann eine entsprechend kürzere Gewindestange (-spindel) 10 zum Einsatz gelangen.

### Bezugszeichenliste

- 2: Luftfeder
- 4: Abdeckplatte
- 6: Rollbalg
- 6a: Balgvolumen
- 6b: oberer Rand des Rollbalgs
- 6c: unteres Ende (unterer Rand) des Rollbalgs, Dichtwulst
- 8: (Abroll-)Kolben
- 8a: Kolbenvolumen
- 8b: Boden des (Abroll-)Kolbens
- 8c: oberes Ende des Kolbens, Dichtfläche
- 10: Gewindestange, Gewindespindel
- 10a: oberes Ende der Gewindestange
- 10b: unteres Ende der Gewindestange
- 12: Spannteller
- 14: Bohrungen, Löcher
- 16: Hülse
- 18: Gewinde
- 20: Mutter
- 22: O-Ring(e)
- 24: herkömmliche Dichtzone
- 26: erfindungsgemäße Abdichtzone
- 28: Dichtlippe

## Patentansprüche

1. Rollbalg-Luftfeder (2)
mit einem Rollbalg (6),
mit einer Abdeckplatte (4) und
mit einem Abrollkolben (8),
wobei der Rollbalg (6) einen mittels eines Spanntellers (12) am Abrollkolben (8) verspannbaren Dichtwulst (6c) aufweist
und das Kolben-Volumen (8a) und das Rollbalg-Volumen (6a) zum Zwecke eines Druckausgleichs miteinander verbunden (14) sind;
wobei auf dem oberen, über dem Spannteller (12) hinausragenden Ende einer Gewindestange (10) ein Gummipuffer angeordnet ist; und
wobei der Spannteller (12) ein tiefgezogener/-geformter, mit mehreren Bohrungen (14) versehener Topf ist,
**dadurch gekennzeichnet,**
daß der am unteren Rand des Rollbalgs (6) ausgebildete Wulst (6c) mit Hilfe der hinreichend langen Gewindestange (10), die gegenüber dem Boden (8b) des Abrollkolbens (8) mittels eines oder mehrerer O-Ringe (22) abgedichtet ist,
fest zwischen dem mit Löchern (14) versehenen Spannteller (12) und der Dichtfläche (8c) des Kolbens (8) eingespannt ist,
wobei die Außenseite (26) des unteren Wulstes (6c) als Abdichtzone zwischen dem Rollbalg (6) und der Dichtfläche (8c) des Kolbens (8) ausgebildet ist.

2. Luftfeder nach Anspruch 1,
**dadurch gekennzeichnet,**
daß der Rand (12a) des Spanntellers (12) lose oder durch Vulkanisation mit dem unteren Rand (6c) des Rollbalgs (6) verbunden ist.

3. Luftfeder nach Anspruch 1 oder 2,
**dadurch gekennzeichnet,**
daß der kolbenseitige Balgwulst (6c) mit mehreren umlaufenden Dichtlippen (28) versehen ist.

## Claims

1. Roller bellows air spring (2), comprising:
a roller bellows (6),
a cover plate (4) and
a roller piston (8),
the roller bellows (6) having a sealing bead (6c), which can be clamped to the roller piston (8) by means of a clamping plate (12),
and the piston volume (8a) and the roller bellows volume (6a) being interconnected (14) for the purpose of equalising pressure;
a rubber buffer being disposed on the upper end of a threaded rod (10) protruding beyond the clamping plate (12); and
the clamping plate (12) being a deep-drawn/-moulded, cup-shaped container provided with a plurality of bores (14),
characterised in that
the bead (6c), which is provided on the lower edge of the roller bellows (6), is clamped firmly in position between the clamping plate (12), which is provided with holes (14), and the sealing face (8c) of the piston (8), by means of the sufficiently long threaded rod (10), which is sealed from the base (8b) of the roller piston (8) by means of one or more O-rings (22),
the external surface (26) of the lower bead (6c) being provided as the sealing area between the roller bellows (6) and the sealing face (8c) of the piston (8).

2. Air spring according to claim 1, characterised in that the edge (12a) of the clamping plate (12) is connected to the lower edge (6c) of the roller bellows (6) loosely or by vulcanisation.

3. Air spring according to claim 1 or 2, characterised in that the bellows bead (6c) on the piston side is provided with a plurality of circumferential sealing lips (28).

## Revendications

1. Ressort pneumatique (2) a vessie roulante
comprenant une vessie roulante (6),
ainsi qu'une plaque de couverture (4) et
un piston (8) formant chemin de roulement.
la vessie roulante (6) comprenant un bourrelet d'étanchéité (6c) pouvant être encastré sur le piston (8) formant chemin de roulement au moyen d'un plateau de serrage (12)
et le volume (8a) du piston et le volume (6a) de la vessie roulante étant raccordés (14) l'un à l'autre en vue d'un équilibre de pression ;
un tampon de caoutchouc étant disposé à l'extrémité supérieure d'une tige filetée (10) qui déborde au-dessus du plateau de serrage (12) ; et
le plateau de serrage (12) étant une cuvette réalisée par étirage profond/par formage et comportant plusieurs trous (14),
caractérisé
en ce que le bourrelet (6c) réalisé sur le bord inférieur de la vessie roulante (6) est encastré étroitement entre le plateau de serrage (12) comportant les trous (14) et la surface d'étanchéité (8c) du piston (8) au moyen de la tige filetée (10) qui est suffisamment longue et qui est rendue hermétique par rapport au fond (8b) du piston (8) formant chemin de roulement au moyen d'un ou de plusieurs joints toriques (22).
le côté extérieur (26) du bourrelet inférieur (6c) étant conformé en zone d'étanchéité entre la vessie roulante (6) et la surface d'étanchéité (8c) du piston (8).

2. Ressort pneumatique selon la revendication 1,
caractérisé en ce que le bord (12a) du plateau de serrage (12) est relié librement ou par vulcanisation au bord inférieur (6c) de la vessie roulante (6).

3. Ressort pneumatique selon la revendication 1 ou 2,
caractérisé en ce que le bourrelet (6c), côté piston, de la vessie comporte plusieurs lèvres circonférentielles d'étanchéité (28).
